Europäisches Patentamt

European Patent Office

Office européen des brevets

(11) Publication number: **0 251 970**
**B1**

(12) **EUROPEAN PATENT SPECIFICATION**

(45) Date of publication of patent specification: **24.10.90**

(21) Application number: **87500020.0**

(22) Date of filing: **29.04.87**

(51) Int. Cl.⁵: **H 01 M 2/30, H 01 R 11/28**

(54) An electric storage battery.

(30) Priority: **25.06.86 ES 295402**

(43) Date of publication of application:
**07.01.88 Bulletin 88/01**

(45) Publication of the grant of the patent:
**24.10.90 Bulletin 90/43**

(84) Designated Contracting States:
**AT BE CH DE FR GB GR IT LI LU NL SE**

(56) References cited:
**EP-A-0 140 581**
**DE-A-1 771 255**
**GB-A-2 087 133**
**GB-A-2 149 563**
**US-A-1 411 988**
**US-A-2 004 049**
**US-A-4 064 328**

(73) Proprietor: **SOCIEDAD ESPANOLA DEL ACUMULADOR TUDOR, S.A.**
**Condesa de Venadito, 1**
**E-28027 Madrid (ES)**

(72) Inventor: **Lopez-Doriga, Lopez-Doriga, Juan Antonio**
**Cea Bermúdez 37**
**E-28003 Madrid (ES)**

(74) Representative: **Gomez-Acebo y Pombo, José Miguel**
**c/o CLARKE, MODET & Co. Paseo de la Castellana 164**
**E-28046 Madrid (ES)**

# Description

The invention relates to an electric storage battery of the lead-acid kind, comprising a vessel closed at the top by a cover upon which the connecting terminals are disposed.

The object of the invention is to obtain a battery of the aforementioned kind which can be connected in uniform or standard manner in any direction, the invention being particularly applicable to traction batteries.

Lead-acid accumulators or batteries are classified, mainly with respect to their intended purpose, in three general groups: starting batteries, traction batteries and stationary batteries. The different function or use made of the batteries accounts for the difference in design thereof, since the services required are different.

The most important services, with regard to traction batteries, are the capacity thereof and the number of charging and discharging cycles which they can undergo during their useful life.

In order to obtain these services, it is essential that the battery should be adequate designed, not only with regard to the components giving rise to the electrochemical reaction inside the vessels, but also with regard to those components (mainly terminals and connections) which are outside the battery.

At present traction batteries have a wide variety of sizes and shapes of terminals and connections, imposed on the design because of the wide variety of batteries required in the traction vehicles for which they are intended. Even with the same components and the same type thereof, batteries incorporate various types of connections depending on the purpose and distribution or position of the components carried in the casing.

Clearly, therefore, if these components can be standardized it will be easier to manufacture and store them and maintain the batteries.

The object of the invention is to obtain a battery incorporating a new design in the connecting system, so as to improve performances and facilitate storage, manufacture and classification of the required components.

By means of the battery according to the invention, the various connection systems are reduced to a single one. The single connecting system also ensures that the connecting distance between contiguous or adjacent components is always the same, irrespective of the relative position of the batteries or accumulators in the casing. With regard to dimensions, therefore, a single connection model can be used.

This possibility offers the following advantages:

The possibility of using universal connections having the same dimensions in all cases, irrespective of the type and distribution of the vessels.

If the connections have a single design, the same applies to the guards thereof which insulate them from external contacts, and this simplifies storage and manufacture thereof.

Also, the dimensions of the connections are much smaller than in existing traction batteries, thus reducing the voltage drops therein.

Normal intermediate connections can be made in the battery, which can therefore be used for other applications at all possible voltages.

To obtain the aforementioned advantages, according to the invention each battery terminal comprises a metal plate, preferably of lead, which is secured to the battery cover and its top surface is intimately joined to the corresponding output terminal. The top surface of the plate has two or more similar projections or heads, shaped so as to form connecting terminals so that, according to the invention, there will be two or more connecting terminals at the positive pole and an equal number at the negative pole.

The aforementioned plate has dimensions such that it reaches to near the three adjacent edges of the battery cover, the top projections from each plate being disposed so that each of them is near one of the aforementioned edges and all equidistant therefrom.

The plates constituting the terminals are disposed in respective recesses formed at the top in the battery cover. The recesses are closed preferably by a cover formed with orifices for the projections or heads constituting the connecting terminals. The orifices can be closed by removable, easily dismantled hoods, so that only the terminal for use at each pole is uncovered at any time.

The aforementioned features and other characteristics of the invention will be more clearly understood from the following description, given with reference to the accompanying drawings showing a non-limitative embodiment. In the drawings:

Fig. 1 is a partial section of a traction battery constructed according to the invention;

Fig. 2 is a plan view of the battery in Fig. 1;

Fig. 3 is a plan view of the connection between two batteries having any of their side walls adjoining, and

Fig 4 is a partial elevation of the batteries in Fig. 3.

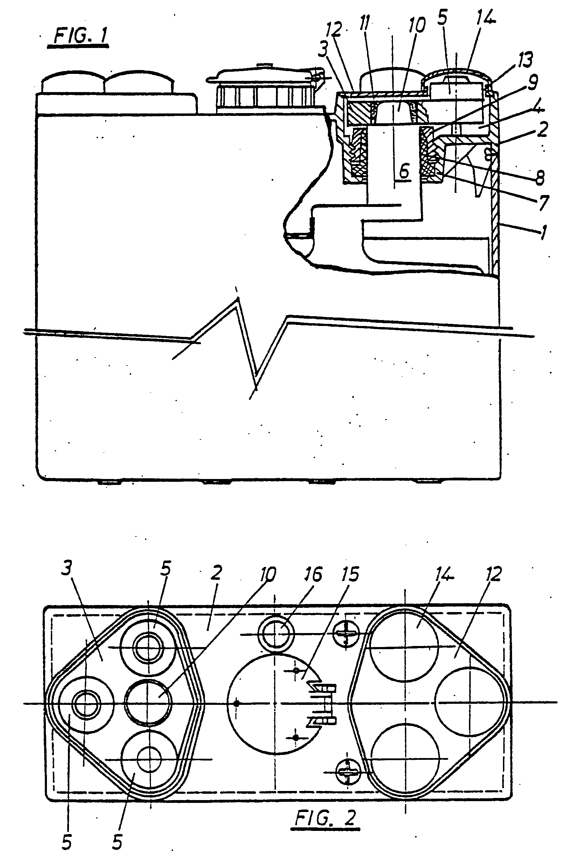

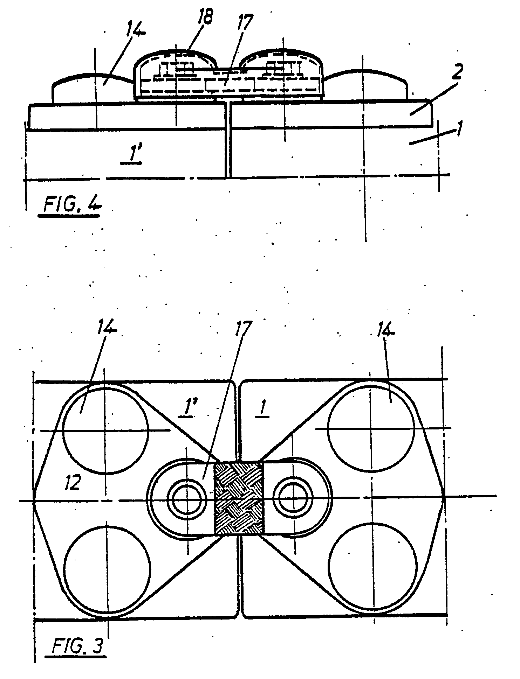

Figs. 1 and 2 show a traction battery comprising a vessel 1 closed at the top by a cover 2 above which the positive and negative output terminals are disposed.

According to the invention, each output terminal is a metal plate 3, preferably based on lead, which is disposed above the battery cover 2 and intimately joined to the corresponding output terminal 6.

Preferably the battery cover 2 has a recess 4 at the intended position of plate 3, so as to hold the plate.

As can be seen more clearly from Fig. 2, plates 3 have a dimension such that they extend to near the three adjacent edges of the battery cover 2.

Each plate 3 has three upward projections or heads 5, each disposed near one of the three aforementioned adjacacent edges, the three heads being equidistant from the corresponding edges.

As Fig. 1 shows, recess 4 has a deeper part 7 around terminal 6, in which a first sleeve 8 of elastic material is disposed around terminal 6 and adjusted thereto and pressed against the bottom of part 7, and a second sleeve 9 of plastics is secured to the wall of part 7 and presses the elastic sleeve 8 over the surface of terminal 6 and the bottom of part 7. A sealing product can also be disposed between sleeve 9 and the wall of part 7.

Terminal 6 ends upwardly in a portion 10 inserted through an orifice in plate 3, to which it is secured by soldering 11.

Recess 4 is closed at the top by a cover 12 having three outlet apertures 13 through which the projections or heads 6 extend. The openings can be closed by removable, easily dismountable hoods 14, so that only that projection or head 5 which is to be used as a connecting component is left uncovered.

The battery also has a plug 15 for filling with electrolyte, and can also have an inspection window 16.

By means of the aforementioned construction, in the case both of the positive pole and the negative pole, the three projections or heads 5 used as connecting terminals are disposed at the same distance from the edges of the battery cover.

This feature is very advantageous when different batteries are interconnected.

As can be seen in Figs. 3 and 4, batteries 1 and 1' to be connected can have any of their sides placed adjacent, since the connecting terminals 5 are always equidistant from one another whether the larger sides or smaller sides are adjacent. In both cases, the distance between the terminals 5 of the two batteries will be the same, so that the connections 17 can be standard and of reduced length, thus reducing the voltage drop. As Fig. 4 shows, connection 17 can be protected by a cover or lid 18.

Terminals constructed according to the invention can serve as connections which are welded or screwed via bars or cables.

As can be seen, the length of the connection between components in the battery according to the invention is constant irrespective of the relative positions of the batteries, so that a single type of connection can be used, with regard to dimensions.

In the described example, each plate 3 has three projections, but the number thereof can be varied, e.g. four, but must at least two in every case.

Now that the nature of the invention and the method of putting it into practice have been sufficiently described, it must be understood that the previously-mentioned features can be modified in detail provided they do not depart from the main principle.

## Claims

1. An electric storage battery comprising a positive output terminal and a negative output terminal, characterised in that each of the aforementioned terminals comprises a metal plate, preferably of lead, secured to the battery cover and having its bottom surface joined to the corresponding output terminal, whereas its top surface has at least two similar projections or heads forming connecting terminals; each plate extends to near the three adjacent edges of the battery cover, each top projection of the plate being disposed near one edge and equidistant from that edge.

2. A battery according to claim 1, characterised in that the plates are disposed in respective recesses formed in the top of the battery cover, the recesses being closed by a cover formed with orifices for the projections or heads constituting the connecting terminals, and the orifices in turn being closed by removable, easily dismountable hoods.

3. A battery according to claim 1, characterised in that the recesses have a deep part at the bottom around the output terminal and containing a first sleeve of elastic material and a second sleeve of plastics, the first sleeve being adjusted to the terminal and bearing against the bottom of the deep part and the second sleeve being secured to the wall of the deep part and pressing the first sleeve against the surface of the terminal and the bottom of the deep part; the terminal having a portion which projects beyond the sleeves through an orifice in the plate and is joined thereto by soldering.

## Patentansprüche

1. Eine elektrische Speicherbatterie, die aus einer positiven Ausgangsklemme und einer negativen Ausgangsklemme besteht, dadurch gekennzeichnet, dass jede der o.a. Klemmen aus einer Metallplatte — vorzugsweise aus Blei — besteht, die am Deckel der Batterie befestigt ist und deren untere Fläche der entsprechenden Ausgangsklemme anliegt, während ihre Oberfläche mindestens zwei ähnliche Vorsprünge oder Köpfe besitzt, die Anschlussklemmen bilden, da jede Platte bis in die Nähe der drei angrenzenden Kanten des Batteriedeckels reicht, wobei sich jeder obere Vorsprung der Platte in der Nähe und im gleichen Abstand der besagten Kanten befindet.

2. Eine Batterie gemäss Anspruch 1, dadurch gekennzeichnet, dass die Platten in jeweiligen Vertiefungen liegen, die im oberen Teil des Batteriedeckels gebildet werden und die von einem Deckel abgeschlossen werden, der für die Vorsprünge oder Köpfe mit Öffnungen versehen ist, welche die Anschlussklemmen bilden; diese Öffnungen sind wiederum durch bewegliche leicht abnehmbare Hauben geschlossen.

3. Eine Batterie gemäss Anspruch 1, dadurch gekennzeichnet, dass die Vertiefungen einen noch niedrigeren Teil am Boden bei der Ausgangsklemme besitzen, wo sie eine erstere Muffe aus elastischem Material und eine zweitere Muffe aus Kunststoff aufweisen; die erste Muffe ist der Klemme angepasst und hat Kontakt mit dem tiefliegenden Teil und die zweite Muffe ist an der Wand des tiefen Teils befestigt, wo sie die erste Muffe gegen die Oberfläche der Klemme und den Boden des tiefen Teils andrückt; die Klemme hat einen Teil, der durch eine Öffnung in der Platte über die Muffen herausragt und der daran angeschweisst ist.

## Revendications

1. Un accumulateur électrique qui se compose d'une borne de sortie positive et d'une borne de sortie négative, caractérisé par le fait que chacun des pôles susdits se composent d'une plaque de métal, de préférence en plomb, fixée au couvercle de l'accumulateur et qui a sa surface inférieure unie au pôle de sortie correspondant, tandis que sa surface supérieure a au moins deux projections ou têtes similaires qui forment des bornes de connexion; parce que chaque plaque est projetée jusqu'à la proximité des trois bords adjacents du couvercle de l'accumulateur, chaque projection supérieure de la plaque étant disposée proche d'un bord et équidistant de celui-ci.

2. Un accumulateur conformément à la revendication 1, caractérisé parce que les plaques sont disposées en feuillures respectives formées sur la partie supérieure du couvercle de l'accumulateur, les feuillures étant fermées par un couvercle formé avec des orifices pour les projections ou les têtes qui constituent les bornes de connexion et les orifices étant, à leur tour, fermés à l'aide de capuchons mobiles, facilement démontables.

3. Un accumulateur d'après la revendication 1, caractérisé parce que les feuillures ont une partie profonde dans le fond autour de la borne de sortie et contiennent un premier manchon en matériel plastique et un deuxième manchon en plastique, le premier manchon étant ajusté à la borne et faisant contact avec le fond de la partie profonde et le deuxième manchon étant fixé à la paroi de la partie profonde et - pressant le premier manchon contre la surface de la borne et le fond de la partie profonde; la borne ayant une partie qui se projette au delà des manchons au travers d'un orifice de la plaque et étant unie à celle-ci moyennant soudure.

FIG. 1

FIG. 2

FIG. 4

FIG. 3